# EUROPÄISCHE PATENTANMELDUNG

(11) **EP 1 504 703 A1**
(43) Veröffentlichungstag der Anmeldung: **09.02.2005**
(21) Anmeldenummer: 04015227.4
(22) Anmeldetag: 29.06.2004
(51) Int. Cl.: A47J 27/21

(54) **Elektrisch beheizbares Kochgeschirr und Verfahren zu dessen Montage**

(30) Priorität: 05.08.2003 DE 10335823
(71) Anmelder: BSH Bosch und Siemens Hausgeräte GmbH, 81739 München (DE)
(72) Erfinder: Mühlbacher, Richard, 83224 Grassau (DE); Steffl, Michael, 83250 Marquartstein (DE)

(57) **Zusammenfassung**

Die Erfindung betrifft ein elektrisch beheizbares Kochgeschirr, umfassend ein Kochgefäß (10) aus Kunststoff, einen Gefäßboden (30) und ein Heizmodul (20), dessen tellerförmiger innerer Bodenabschnitt (21) einen inneren Boden des Kochgefäßes (10) bildet und das eine unterhalb des Bodenabschnitts (21) angeordnete elektrische Heizeinrichtung (26) aufweist, und ein ringförmiges Dichtelement (22), mittels dessen das Heizmodul (20) dichtend an einer Innenmantelfläche (16) des Kochgefäßes (10) befestigbar ist.

Es ist vorgesehen, dass das Heizmodul (20) bei an einer Unterseite (13) des Kochgefäßes (10) montiertem Gefäßboden (30) zwischen diesem und der Innenmantelfläche (16) des Kochgefäßes (10) eingespannt ist.

Die Erfindung betrifft weiterhin ein Verfahren zur Montage eines elektrisch beheizbaren Kochgeschirrs, bei dem ein tellerförmiges Heizmodul (20) mittels eines ringförmigen Dichtelements (22) von unten in eine zumindest abschnittsweise glattflächige und hohlzylindrische Innenmantelfläche (16) eines Kochgefäßes (10) aus Kunststoff eingeschoben wird, wobei das Dichtelement (22) den Bereich oberhalb des Heizmoduls (20) nach unten hin abdichtet. Anschließend wird ein Gefäßboden (30) an einer Unterseite (13) des Kochgefäßes (10) montiert, wobei das Heizmodul (20) zwischen dem Gefäßboden (30) und der Innenmantelfläche (16) des Kochgefäßes (10) eingespannt wird.

## Beschreibung

Die vorliegende Erfindung betrifft ein elektrisch beheizbares Kochgeschirr gemäß Oberbegriff des Patentanspruchs 1 sowie ein Verfahren zur Montage eines elektrisch beheizbaren Kochgeschirrs gemäß Oberbegriff des Patentanspruchs 9.

Bei elektrisch beheizbaren Kochgeschirren, die ein Kochgefäß aus Kunststoff und ein darin einsetzbares Heizmodul aufweisen, wird das Heizmodul üblicherweise gegen einen Absatz beziehungsweise einen Vorsprung an einer Innenmantelfläche des Kochgefäßes angedrückt und dort montiert. Die Montage des Heizmoduls erfolgt hierbei normalerweise von einer offenen Bodenseite des Kochgefäßes her. Die Fixierung kann beispielsweise mittels eines Spreizringes oder dergleichen erfolgen, der unterhalb des in seiner Einbauposition auf Anschlag liegenden Heizmoduls montiert wird.

Aus der WO 99/17645 A1 ist ein elektrisch beheizbares Kochgeschirr mit einem Kochgefäß aus Kunststoff bekannt, bei dem ein tellerförmiges Heizmodul von einer offenen Unterseite her montiert und an einem inneren Absatz des Gefäßes gedrückt werden kann. Als alternative Befestigungsmöglichkeit wird vorgeschlagen, das Heizmodul mittels eines Dichtrings zu montieren, der mehrere flexible Lamellen an seinem Außenumfang aufweist, die sich beim Einschieben des Dichtrings nach unten umbiegen. Hierbei erfolgt die Fixierung des Heizmoduls mittels eines Spreizrings, der in die Innenmantelfläche des Kochgefäßes eingesetzt wird.

Eine Aufgabe der vorliegenden Erfindung besteht darin, ein elektrisch beheizbares Kochgeschirr zur Verfügung zu stellen, bei dem eine einfache und zuverlässige Montage eines Heizmoduls an einer weitgehend glatten und ebenen Innenmantelfläche eines Kochgefäßes ermöglicht ist.

Diese Aufgabe wird mit dem Gegenstand der unabhängigen Patentansprüche gelöst. Merkmale vorteilhafter Weiterbildungen der Erfindung ergeben sich aus den jeweiligen abhängigen Ansprüchen.

Bei einem erfindungsgemäßen elektrisch beheizbaren Kochgeschirr ist vorgesehen, dass ein Heizmodul bei an einer Unterseite des Kochgefäßes montiertem Gefäßboden zwischen diesem und einer Innenmantelfläche eines Kochgefäßes aus Kunststoff in seiner Endlage fixiert und eingespannt ist. Der Gefäßboden kann hierbei wahlweise mit dem Kochgefäß und/oder mit dem Heizmodul verschraubbar und/oder verschnappbar ausgeführt sein. Auf diese Weise ist eine zuverlässige Befestigung des zuvor in seine vorgesehene Einbauposition geschobenen Heizmoduls an der Innenmantelfläche des Kochgefäßes ermöglicht.

Um eine zuverlässige Fixierung des Heizmoduls an der zumindest abschnittsweise glattflächigen und hohlzylindrischen Innenmantelfläche des Kochgefäßes zu gewährleisten, ist am Außenumfang des tellerförmigen Heizmoduls ein Dichtelement vorgesehen, das an seinem Außenumfang eine, vorzugsweise jedoch mehrere flexible Lamellen aufweist, die radial nach außen abstehen und deren Außendurchmesser größer ist als ein Innendurchmesser des Kochgefäßes. Beim Einschieben des Heizmoduls von einer offenen Unterseite des Kochgefäßes verformen sich die Lamellen und biegen sich derart nach unten um, dass eine zuverlässige Abdichtung des Behälterinnenraums sowie eine gute Fixierung des Heizmoduls an seiner vorgesehenen Montageposition gewährleistet ist.

Die Innenmantelfläche des Kochgefäßes ist zumindest im unteren Bereicht glattflächig und holzylindrisch ausgebildet, sodass das Heizmodul leicht von unten eingeschoben werden kann. Die Lamelle wird bei montiertem Heizmodul gleichmäßig verformt und nach unten umgebogen.

Gemäß einer ersten Ausführungsform der Erfindung ist der Gefäßboden mit dem Kochgefäß verbindbar. Hierzu können bspw. mehrere Schnapphaken am Gefäßboden vorgesehen sein, welche in korrespondierende Aussparungen an der hohlzylindrischen Wand des Kochgefäßes eingreifen und dort einschnappen. Ggf. kann der Gefäßboden auch mit dem Kochgefäß verschraubt werden. Eine alternative Befestigungsmöglichkeit sieht vor, dass der Gefäßboden nur mit dem Heizmodul verbunden wird. Er kann insbesondere mit diesem verschraub- oder verschnappbar ist. Auch damit kann eine zuverlässige Positionierung und Befestigung des Heizmoduls sowie des Gefäßbodens erreicht werden, da das in seinen Einbauposition montierte Heizmodul gleichzeitig den Gefäßboden in seine Endlage fixiert.

Bei einer Montage des erfindungsgemäßen elektrisch beheizbaren Kochgeschirrs wird zunächst das Heizmodul mit dem damit verbundenen Dichtelement von unten her in das Kochgefäß eingeschoben, wobei sich die flexiblen Lamellen des Dichtelements umbiegen. Anschließend wird der Gefäßboden montiert, wodurch gleichzeitig das Heizmodul in seiner Endlage fixiert wird.

Die Erfindung wird nachfolgend anhand eines bevorzugten Ausführungsbeispiels unter Bezugnahme der beiliegenden Zeichnungen näher erläutert. Dabei zeigt:
- Figur 1: ein Ausführungsbeispiel eines elektrisch beheizbaren Kochgeschirrs in schematischer Perspektivansicht,
- Figur 2: eine perspektivische Teilschnittdarstellung einer Verbindungsstelle zwischen einem Heizmodul und einer Innenmantelfläche des Kochgefäßes,
- Figur 3: eine perspektivische Teilschnittdarstellung eines unterhalb des Heizmoduls mit dem Kochgefäß verbundenen Gefäßbodens,
- Figur 4: eine schematische Teilschnittdarstellung einer alternativen Verbindung zwischen Gefäßboden und Kochgefäß und
- Figur 5: eine schematische Schnittansicht eines Teils eines Dichtelements, das zwischen Heizmodul und Innenmantelfläche des Kochgefäßes angeordnet ist.

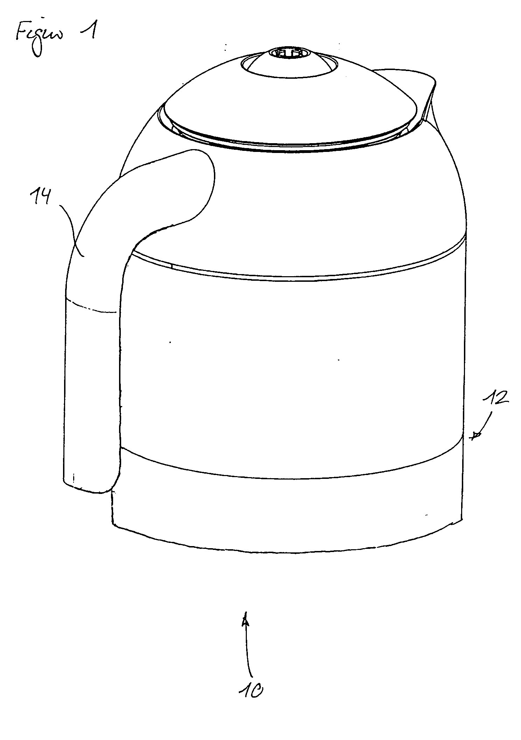

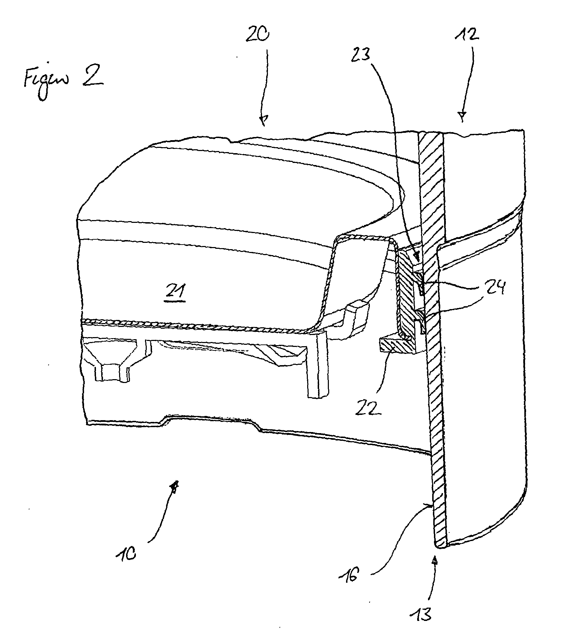

Die Figuren 1 bis 5 zeigen ein Kochgefäß 10 als Ausführungsbeispiel eines elektrisch beheizbaren Kochgeschirrs. Anhand der Figuren 2 bis 5 wird zudem die Montage bzw. der Zusammenbau des Kochgefäßes 10 erläutert. Dabei zeigt die Figur 1 in schematischer Darstellung ein Kochgefäß 10, das in einem unteren Bereich ein elektrisch betreibbares Heizmodul aufweist, das anhand der Figuren 2 bis 5 näher erläutert wird. Ein Handgriff 14 ermöglicht die Handhabung des Kochgefäßes 10, insbesondere das Ausgießen einer darin befindlichen Flüssigkeit, bspw. der darin erhitzten Flüssigkeit nach dem Kochen.

Der perspektivische Detailschnitt der Figur 2 verdeutlicht das in der weitgehend ebenen und zumindest im unteren Bereich 12 hohlzylindrischen Innenmantelfläche 16 des vorzugsweise aus Kunststoff bestehenden Kochgefäßes 10 eingesetzte Heizmodul 20. Das eine im Wesentlichen tellerförmige Kontur aufweisende Heizmodul 20 wird an seinem äußeren Umfang mittels eines flexiblen Dichtelements 22 montiert, das an seinem äußeren Umfang 23 zwei radial abstehende flexible Lamellen 24 aufweist, deren Außendurchmesser größer ist als ein Innendurchmesser der Innenmantelfläche 16 des Kochgefäßes 10 in dessen unterem Bereich 12. Das Dichtelement 22 wird über den äußeren Rand des Heizmoduls 20 gestülpt, so dass dieses zuverlässig mit dem Dichtelement 22 verbunden ist. Gleichzeitig wird damit eine Abdichtung des Bodenabschnitts 21 des Heizmoduls 20 noch oben hin gebildet, so dass die im Behälterinneren des Kochgefäßes 10 befindliche Flüssigkeit nicht nach unten austreten kann.

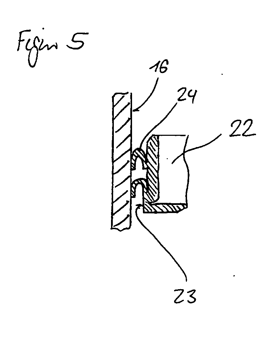

Bei der Montage des Heizmoduls 20 mit dem darauf aufgesteckten Dichtelement 22 von der offenen Unterseite 13 des Kochgefäßes 10 her werden die flexiblen Lamellen 24 in der gezeigten Weise nach unten umgebogen (vgl. Figuren 2 und 5), so dass eine zuverlässige Abdichtung des oberen Bereichs des Kochgefäßes 10 mit der darin befindlichen Flüssigkeit zum nach unten offenen Boden gewährleistet ist. Weiterhin wird auf diese Weise eine Fixierung des Heizmoduls 20 mittels einer reibschlüssigen Verbindung an der glatten Innenmantelfläche 16 des Gefäßes 10 erreicht. Aufgrund der umgebogenen Lamellen 24 wird das elastische Dichtelement 22 leicht komprimiert und sitzt unter Vorspannung im Behälter.

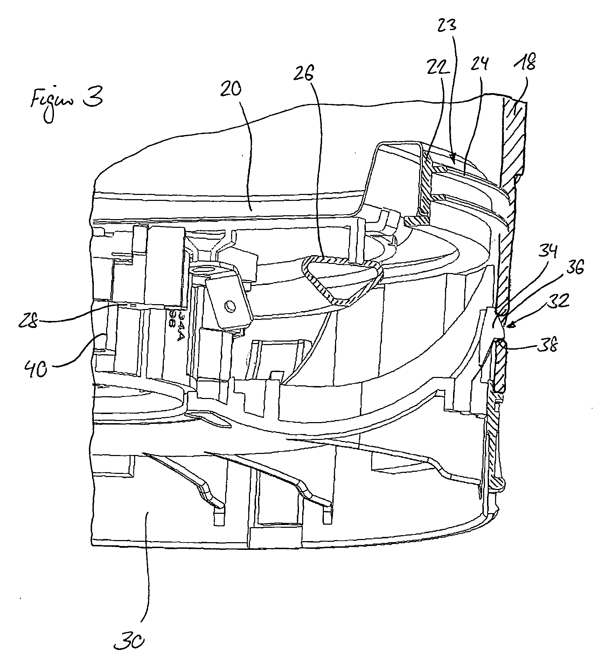

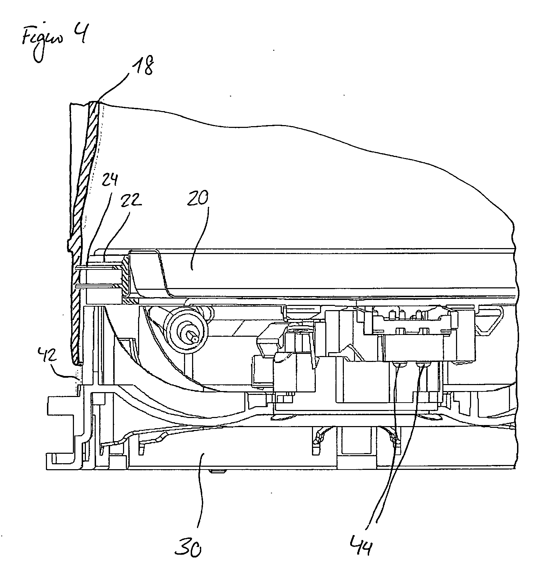

Nachdem das Heizmodul 20 zusammen mit dem Dichtelement 22 in der gezeigten Weise von unten in das Kochgefäß 10 eingefügt ist, wird ein zusätzlicher Gefäßboden 30 montiert. Die Montage des Gefäßbodens 30 kann auf unterschiedliche Arten erfolgen, wie dies beispielhaft anhand der Figuren 3 und 4 verdeutlicht ist.

Dabei zeigt Figur 3 eine erste alternative Befestigungsmöglichkeit, bei der der Gefäßboden 30 von unten gegen das Heizmodul 20 gedrückt und über Schnappverbindungen in der Wandung 18 des Kochgefäßes 10 fixiert wird. Hierzu sind eine Reihe von Aussparungen 32 in der Wandung 18 des Kochgefäßes 10 vorgesehen, in die entsprechende Rasthaken 34 eingreifen, die flexibel am Gefäßboden 30 befestigt sind und die beim Einfügen des Gefäßbodens 30 nach innen hin verbogen werden und beim Erreichen der Aussparungen 32 nach außen federn und dort einrasten. Durch die nach oben hin geneigte Außenfläche 36 der Rasthaken 34 könne diese in der gewünschten Richtung nach oben verschoben werden, können jedoch auf Grund des horizontalen Abschnitts 38 an ihrer Unterkante nicht mehr selbsttätig aus den Aussparungen 32 gleiten. Erst durch manuelles Drücken der Rashaken 34 durch die Aussparungen 32 in Richtung zur Mittelachse des Gefäßbodens 30 ist ein lösen des Gefäßbodens 30 aus seiner Endlage an der Unterseite 13 des Kochgefäßes ermöglicht.

Eine ringförmige Heizeinrichtung 26, welche zur Sicherstellung eines guten Wärmeübergangs vorzugsweise stoffschlüssig mit dem Bodenabschnitt 21 des Heizmoduls 20 verbunden ist, ist in Figur 3 lediglich angedeutet. Die Heizeinrichtung 26 kann bspw. einen elektrisch betreibbaren Heizwiderstand o. dgl. aufweisen.

Ein mittlerer Bereich 40 des Gefäßbodens 30 drückt bei fertig montierten Einzelteilen gegen einen unteren Auflagebereich 28 des Heizmoduls 20, wodurch dieses in seiner Endlage fixiert ist und nicht nach unten gleiten kann. Ein Verrutschen des Heizmoduls 20 nach oben wird einerseits durch die Wirkung der Schwerkraft und andererseits durch die nach unten umgebogenen Lamellen 24 des Dichtelements 22 weitest gehend verhindert.

Figur 4 zeigt eine alternative Befestigungsmöglichkeit des Heizmoduls 20 sowie des Gefäßbodens 30, bei welcher dieser mit dem Heizmodul 20 verschraubt wird, nachdem dieses in seine vorgesehene Einbauposition gebracht worden ist. Eine zusätzliche Befestigung des Gefäßbodens 30 an der Wandung 18 des Kochgefäßes10 ist bei dieser Variante nicht vorgesehen. Allerdings kann der Gefäßboden 30 an seinem Außenumfang einen Anschlagbund 42 aufweisen, der bei einer Anlage an einer Unterkante der Wandung 18 ein weiteres Schieben des Heizmoduls 20 und des damit verbundenen Gefäßbodens 30 nach oben verhindert.

Der Gefäßboden 30 ist mit wenigstens einer Schraubverbindung 44 mit dem Heizmodul 20 verbunden. Wahlweise kann diese Verbindung jedoch auch als Rastverbindung o. dgl. ausgebildet sein. Die zuverlässige Gewährleistung der Einbaulage des Heizmoduls 20 sowie des Gefäßbodens 30 wird bei dieser Variante in erster Linie durch die Klemmkraft des Dichtelements 22 an der Innenmantelfläche 16 des Kochgefäßes 10 gewährleistet, da keine weitere Verbindung zwischen Kochgefäß 10 und Gefäßboden 30 vorgesehen ist. Ggf. kann jedoch eine solche zusätzliche Verbindung vorgesehen werden, um die Sicherheit gegen ein Verrutschen der Teile nach unten und/oder nach oben zu erhöhen.

Figur 5 zeigt nochmals die Einbaulage des flexiblen Dichtelements 22, bei dem die am Außenumfang 23 angeordneten flexiblen Lamellen 24 nach Einschieben des Heizmoduls 20 nach oben in das Kochgefäß 10 jeweils nach unten umgebogen sind. Hierdurch wird eine Abdichtung des Gefäßes gegen Auslaufen von darin befindlichen Flüssigkeit verhindert.

Bei allen beschriebenen Ausführungsformen ist vorzugsweise an einer Unterseite des Gefäßbodens 30 ein elektrischer Anschluss (nicht dargestellt) vorgesehen, über den das elektrisch betreibbare Heizmodul 20 mit elektrischer Energie versorgt werden kann. Der elektrische Anschluss kann insbesondere in einem Auflagesockel o. dgl. integriert sein, auf den das Kochgefäß 10 aufgesetzt werden kann, so dass beim Aufsetzen eine elektrisch Verbindung hergestellt wird. Wahlweise kann der elektrische Anschluss jedoch auch seitlich aus der Wandung 18 des Kochgefäßes 10 heraus geführt sein, vorzugsweise im unteren Bereich 12. Weitere alternative Anschlussmöglichkeiten sind jedoch ebenso denkbar.

Bei den anhand der Figuren 1 bis 5 beschriebenen Ausführungsformen ist das Kochgefäß 10 mit einer zumindest abschnittsweise glattflächigen, hohlzylindrischen und unten offenen Gefäßwand aus Kunststoff versehen. Diese Gestaltung lässt sich besonders einfach und kostengünstig herstellen, da keinerlei Absätze, Vorsprünge, Hinterschnitte o. dgl. an der Innenmantelfläche 16 vorgesehen werden müssen. Das Kochgefäß 10 kann ggf. in einem einzigen Arbeitsgang, bspw. mittels eines Spritzgießvorganges hergestellt werden. Gezeigt ist eine einwandige Ausführung, bei der das Heizmodul 20 direkt in die einzige Gefäßwand eingesetzt wird. Möglich sind jedoch auch doppelwandige Ausführungsformen, bei denen das Heizmodul ggf. an einer unteren Kante einer dort endenden inneren Wand eingesetzt wird und diese nach unten abschließt.

Am unteren Bereich 12 der Außenmantelfäche des Kochgefäßes 12 kann ggf. noch ein Dekorring o. dgl. angebracht werden, der bspw. aus Metall bestehen kann. Zu dessen Positionierung kann ein Absatz vorgesehen sein, so dass die Außenflächen des Abdeckoder Dekorrings und des Kochgefäßes bündig miteinander abschließen. Dieser Absatz ist anhand der Figuren 2 bis 4 nur angedeutet. Je nach gewünschter Gestaltung kann ein solcher Ring einteilig geschlossen oder mit einer offenen Verbindungsstelle ausgeführt sein.

## Patentansprüche

1. Elektrisch beheizbares Kochgeschirr, umfassend ein Kochgefäß (10) aus Kunststoff, einen Gefäßboden (30) und ein Heizmodul (20), dessen tellerförmiger Bodenabschnitt (21) einen inneren Boden des Kochgefäßes (10) bildet und das eine unterhalb des Bodenabschnitts (21) angeordnete elektrische Heizeinrichtung (26) aufweist, und ein ringförmiges Dichtelement (22), mittels dessen das Heizmodul (20) dichtend an einer Innenmantelfläche (16) des Kochgefäßes (10) befestigbar ist, **dadurch gekennzeichnet, dass** das Heizmodul (20) bei an einer Unterseite (13) des Kochgefäßes (10) montiertem Gefäßboden (30) zwischen diesem und der Innenmantelfläche (16) des Kochgefäßes (10) eingespannt ist.

2. Kochgeschirr nach Anspruch 1, **dadurch gekennzeichnet, dass** das Dichtelement (22) an seinem Außenumfang (23) wenigstens eine radikal abstehende, flexible Lamelle (24) aufweist, deren Außendurchmesser größer ist als der Innendurchmesser der Innenmantelfläche (16) des Kochgefäßes (10).

3. Kochgeschirr nach Anspruch 1 oder 2, **dadurch gekennzeichnet, dass** die Innenmantelfläche (16) des Kochgefäßes (10) zumindest im unteren Bereich (12) glattflächig ist und eine hohlzylindrische Kontur aufweist.

4. Kochgeschirr nach einem der Ansprüche 2 oder 3, **dadurch gekennzeichnet, dass** die wenigstens eine Lamelle (24) bei montiertem Heizmodul (20) gleichmäßig verformt und nach unten umgebogen ist.

5. Kochgeschirr nach einem der voranstehenden Ansprüche, **dadurch gekennzeichnet, dass** der Gefäßboden (30) lösbar mit dem Kochgefäß (10) verbindbar ist.

6. Kochgeschirr nach Anspruch 5, **dadurch gekennzeichnet, dass** der Gefäßboden (30) mit dem Kochgefäß (10) verschraub- oder verschnappbar ist.

7. Kochgeschirr nach einem der voranstehenden Ansprüche, **dadurch gekennzeichnet, dass** der Gefäßboden (30) mit dem Heizmodul (20) verbindbar ist.

8. Kochgeschirr nach Anspruch 7, **dadurch gekennzeichnet, dass** der Gefäßboden (30) mit dem Heizmodul (20) verschraub- oder verschnappbar ist.

9. Verfahren zur Montage eines elektrisch beheizbaren Kochgeschirrs, bei dem ein tellerförmiges Heizmodul (20) mittels eines ringförmigen Dichtelements (22) von unten in eine zumindest abschnittsweise glattflächige und hohlzylindrische Innenmantelfläche (16) eines Kochgefäßes (10) aus Kunststoff eingeschoben wird, wobei das Dichtelement (22) den Bereich oberhalb des Heizmoduls (20) nach unten hin abdichtet, **dadurch gekennzeichnet, dass** anschließend ein Gefäßboden (30) an einer Unterseite (13) des Kochgefäßes (10) montiert wird, wobei das Heizmodul (20) zwischen dem Gefäßboden (30) und der Innenmantelfläche (16) des Kochgefäßes (10) eingespannt wird.

10. Verfahren nach Anspruch 9, **dadurch gekennzeichnet, dass** wenigstens eine radial abstehende, flexible Lamelle (24) am Außenumfang (23) des Dichtelements (22) bei dessen Einschieben in das Kochgefäß (10) nach unten umgebogen wird.

11. Verfahren nach Anspruch 9 der 10, **dadurch gekennzeichnet, dass** der Gefäßboden (30) bei seiner Montage mit dem Kochgefäß (10) verbunden wird.

12. Verfahren nach Anspruch 11, **dadurch gekennzeichnet, dass** der Gefäßboden (30) mit dem Kochgefäß (10) verschraubt oder verschnappt wird.

13. Verfahren nach einem der Ansprüche 9 bis 12, **dadurch gekennzeichnet, dass** der Gefäßboden (30) bei seiner Montage mit dem Heizmodul (20) verbunden wird.

14. Verfahren nach Anspruch 13, **dadurch gekennzeichnet, dass** der Gefäßboden (30) mit dem Heizmodul (20) verschraubt oder verschnappt wird.
